(19) Europäisches Patentamt
European Patent Office
Office européen des brevets

(11) **EP 3 371 498 B1**

(12) **FASCICULE DE BREVET EUROPEEN**

(45) Date de publication et mention de la délivrance du brevet:
**14.08.2019 Bulletin 2019/33**

(21) Numéro de dépôt: **16791572.7**

(22) Date de dépôt: **03.11.2016**

(51) Int Cl.:
*F16L 1/12* (2006.01)   *E21B 19/09* (2006.01)
*E21B 21/08* (2006.01)   *F16L 1/235* (2006.01)
*F16L 55/10* (2006.01)   *E21B 43/01* (2006.01)
*E21B 17/01* (2006.01)

(86) Numéro de dépôt international:
**PCT/EP2016/076569**

(87) Numéro de publication internationale:
**WO 2017/076977 (11.05.2017 Gazette 2017/19)**

(54) **CONDUITE, PROCÉDÉ DE RÉGULATION DE LA HAUTEUR D'EAU DANS LA CONDUITE ET MÉTHODE DE MISE EN PLACE ASSOCIÉE**

ROHR, VERFAHREN ZUR REGELUNG DER HÖHE DES WASSERS IM ROHR UND ZUGEHÖRIGES INSTALLATIONSVERFAHREN

PIPE, METHOD FOR REGULATING THE HEIGHT OF THE WATER IN THE PIPE, AND ASSOCIATED INSTALLATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2015 FR 1560514**

(43) Date de publication de la demande:
**12.09.2018 Bulletin 2018/37**

(73) Titulaire: **Technip France**
**92400 Courbevoie (FR)**

(72) Inventeurs:
• **ROUTEAU, Sylvain**
**92210 Saint Cloud (FR)**
• **BOUTEYRE, Philippe**
**75013 Paris (FR)**
• **LACHAUD, Emilie**
**94800 Villejuif (FR)**

(74) Mandataire: **Lavoix**
**2, place d'Estienne d'Orves**
**75441 Paris Cedex 09 (FR)**

(56) Documents cités:
**WO-A1-00/53884          US-A- 4 983 073**
**US-A1- 2015 063 920      US-A1- 2015 308 205**

**Description**

La présente invention concerne une conduite selon le préambule de la revendication 1.

La conduite est notamment un pipeline résistant à la corrosion.

Il est connu d'utiliser une conduite dont la surface interne est réalisée en un alliage résistant à la corrosion, la conduite est alors appelée une conduite CRA. CRA est l'acronyme de « Corrosion Resistive Alloy», ou alliage résistant à la corrosion. Il existe différents types de conduites CRA. Les SDP « Super Duplex pipelines » sont fabriqués dans un seul alliage qui est résistant à la corrosion. Les MCP « Metallurgically clad pipelines » ou « pipelines cladés » sont des conduites dont la surface interne est recouverte d'un alliage résistant à la corrosion au moyen d'un procédé de traitement de surface. Les MLP «Mechanically lined pipelines » sont des conduites qui comportent une chemise interne fabriquée dans un alliage résistant à la corrosion. Les MLP sont quelquefois aussi appelés « pipelines cladés ». Les conduites CRA peuvent également être obtenues par d'autres moyens de fabrication.

Il est connu d'utiliser d'autres types de conduites résistantes à la corrosion, en particuliers, des conduites PLP. PLP est l'acronyme de « Plastic Lined Pipe», pour tuyau à revêtement en plastique.

En eau profonde, le poids d'une conduite à poser devient un problème en raison de capacités limitées des équipements de pose.

La pose de conduites vides permet de limiter ce problème de poids. Mais cette pose est difficile pour plusieurs raisons. Les conduites vides ne résistent pas à la pression hydrostatique en dessous d'une certaine profondeur. De plus, le poids de la conduite peut être utile pour stabiliser la conduite sur le fond de l'eau au cours des opérations de pose. En effet, plus la conduite est légère, plus elle est sensible aux courants et a tendance à se mouvoir dans les courants.

Une solution est de déposer une conduite seulement partiellement vide. Si la conduite est vide jusqu'à une certaine profondeur, elle est plus facilement manipulable.

Il est donc nécessaire de maitriser le poids de la conduite en maitrisant la hauteur de la colonne d'eau située à l'intérieur de la conduite.

Il est connu d'employer des unités d'immersion passive, les PFU « passives flooding unit » pour inhiber et filtrer l'eau de mer entrant dans la conduite afin de limiter la corrosion. Un clapet d'inspection en amont ou en aval de la PFU permet de déclencher ou non l'inondation de la conduite d'une manière passive.

Une telle conduite est décrite dans le document US 2015/063920 A1.

Cependant, lors de la pose d'une conduite partiellement remplie depuis une surface flottante, par exemple, depuis un bateau de pose, la surface flottante est soumise à une variation de hauteur. La variation de hauteur de la surface entraine un mouvement de la conduite.

L'eau au sein de la conduite n'est pas fixe de par sa nature fluide. Dès lors, lorsque la conduite entame son mouvement dynamique, l'eau est entrainée par le mouvement de la conduite. Rapidement, l'eau libre à l'intérieur de la conduite est entrainée par son inertie. L'eau amorce alors une translation alternée par rapport au mouvement de la conduite.

Ce mouvement dynamique de l'eau désynchronisé du mouvement de la conduite est amplifié par la compressibilité de l'eau et de la conduite qui peut se dilater, notamment dans le sens de son diamètre, sous l'effort généré par la colonne d'eau mouvante. Ce mouvement dynamique complexe peut générer une onde acoustique stationnaire.

Ce mouvement dynamique a pour conséquence d'expulser de l'eau intérieure à la conduite par l'extrémité de la conduite située sur le bateau de pose jusqu'au niveau du pont ou au-delà.

Le mouvement dynamique de l'eau au sein de la conduite est appelé le pilonnement. Le pilonnement est un mouvement en translation de haut en bas.

L'expulsion d'eau due au pilonnement est dangereuse pour les personnes situées sur le bateau de pose. En outre, l'eau expulsée par le pilonnement risque d'endommager le matériel présent sur le bateau de pose.

De plus, le pilonnement rend complexe les opérations d'assemblage ou de soudage des tronçons de la conduite sur le bateau de pose. De même, le pilonnement rend difficile l'assemblage d'un tronçon avec une architecture sous-marine comme une architecture ILT (*In Line Tee*), une architecture FLET (*Flowline End Termination*) ou autres.

En effet, il est important de maintenir la surface d'eau à l'intérieur de la conduite à distance de l'extrémité supérieure de la conduite, de manière à limiter l'humidité et les rejets de produits chimiques pendant les opérations de soudage. La soudure est particulièrement complexe dans les cas de conduite CRA. De même, l'assemblage des connecteurs des tronçons d'une conduite flexible est impacté par le niveau d'eau.

Une méthode alternative pour fabriquer et poser des conduites est basée sur l'insertion d'un bouchon dans la conduite. L'insertion d'un bouchon est, par exemple, employée pour éviter l'expulsion d'eau par l'extémité de la conduite pendant les opérations de soudage. Cependant, cette opération est longue et laborieuse. Il est, en outre, nécessaire d'enlever le bouchon à la fin de la mise en place pour utiliser la conduite.

Un but de l'invention est de fournir une conduite pouvant être mise en place dans une étendue d'eau depuis une surface soumise à une variation de hauteur, sans danger et de façon simple et efficace.

A cet effet, l'invention a pour objet une conduite selon la revendication 1.

La conduite selon l'invention peut comprendre l'une ou plusieurs des caractéristiques des revendications dépendantes 2 à 7, prise(s) isolément ou suivant toute combinaison techniquement possible.

L'invention a également pour objet un procédé de régulation selon la revendication 8.

Le procédé de régulation de la hauteur d'eau selon l'invention peut comprendre la caractéristique de la revendication 9.

L'invention a également pour objet une méthode de mise en place d'une conduite dans une étendue d'eau selon la revendication 10.

L'invention sera mieux comprise à la lecture de la description qui va suivre, donnée uniquement à titre d'exemple, et faite en se référant aux dessins annexés, sur lesquels :

- la figure 1 est une vue en coupe d'une conduite selon l'invention ; et
- la figure 2 est une représentation schématique du pilonnement au sein de la conduite.

Dans tout ce qui suit, les termes « extérieur » ou « extérieurement » et « intérieur » ou « intérieurement » s'entendent généralement de manière radiale par rapport à un axe central A-A' de la conduite. Le terme « extérieur » s'entend comme relativement plus éloigné radialement de l'axe central A-A' et le terme « intérieur » s'entend comme plus proche radialement de l'axe central A-A' de la conduite. Par ailleurs, les termes « amont » et « aval » s'entendent généralement par rapport au sens normal de circulation d'un fluide pétrolier. Dans le cas particulier d'une conduite d'injection du fluide, le fluide est injecté depuis la partie haute vers la partie basse de la conduite, les termes « amont » et « aval » doivent par conséquent être interprétés à l'inverse d'une conduite normale de production.

Les pressions mentionnées sont des pressions différentielles, sauf indications contraires.

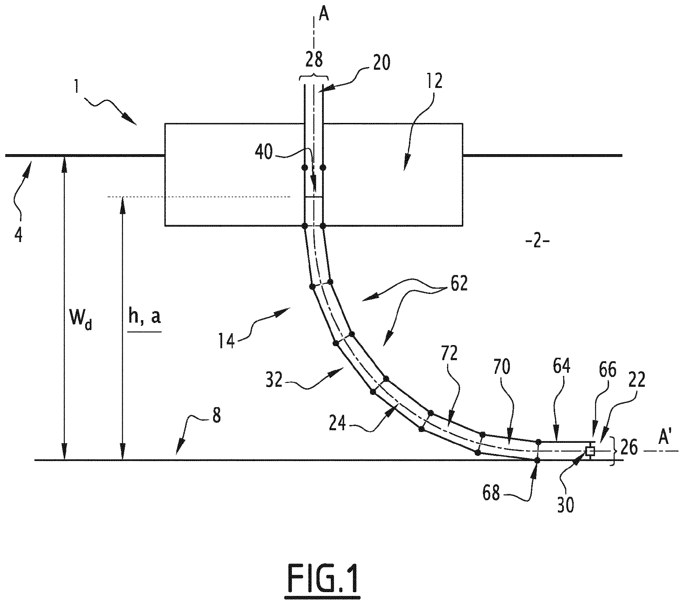

Une installation 1 de pose d'une conduite de transport de fluide dans une étendue d'eau 2 est illustrée partiellement par la figure 1.

L'installation 1 est par exemple destinée à poser une conduite entre un ensemble de fond propre à prélever des hydrocarbures au fond de l'étendue d'eau 2 et un ensemble de récupération (non représentés).

L'étendue d'eau 2 est, par exemple, une mer, un lac ou un océan. La profondeur de l'étendue d'eau 2 au droit de l'installation 1 entre la surface 4 et le fond 8 est, par exemple, comprise entre 50 mètres et 3000 mètres.

L'eau de l'étendue d'eau 2 présente une densité p. Par exemple, l'eau est de l'eau de mer de densité 1025 kg/m$^3$.

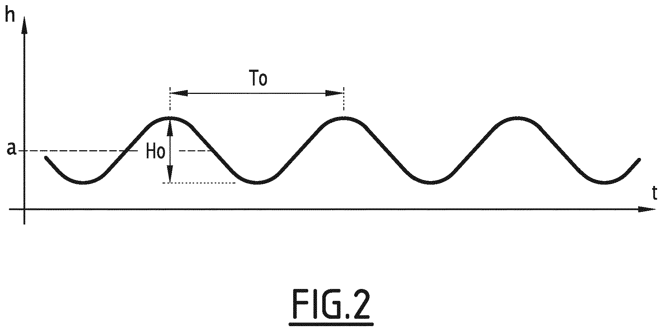

La surface 4 de l'étendue d'eau 2 est par exemple soumise localement à un mouvement oscillant faisant varier sa hauteur, telle que la houle, comme illustré par la figure 2.

L'installation 1 comporte au moins un ensemble de surface 12 avantageusement flottant, destiné à la pose d'une conduite 14. En outre, l'installation 1 comporte un capteur de mesure de caractéristiques de mouvement de l'étendue d'eau 2 et une unité de calcul.

La conduite 14 est destinée à être disposée à travers l'étendue d'eau 2 depuis l'ensemble de surface 12. La conduite 14 est destinée à raccorder l'ensemble de fond à l'ensemble de récupération.

L'ensemble de surface 12 est un bateau de pose de la conduite 14. En variante, l'ensemble de surface 12 est une plateforme.

L'ensemble de surface 12 est soumis à une variation de hauteur. La variation de hauteur de l'ensemble de surface 12 est dépendante de la houle.

La variation de hauteur est, par exemple, périodique.

La variation de hauteur de l'ensemble de surface 12 présente avantageusement une amplitude allant de 0 mètre à 15 mètres pour des périodes comprises entre 0.5 secondes et 10 minutes.

L'ensemble de surface 12 comporte des équipements de pose de la conduite 14.

Les équipements de pose comprennent par exemple des tensionneurs et des unités de soudage. Les équipements de pose sont aptes à assembler séquentiellement des tronçons de la conduite 14 pour la faire descendre progressivement dans l'étendue d'eau 2.

La conduite 14 s'étend entre une extrémité de surface 20 et une extrémité de fond 22 selon un axe central de symétrie A-A'. La conduite 14 comporte une paroi 32 externe étanche définissant un passage intérieur 24 débouchant dans une ouverture inférieure 26 à l'extrémité de fond 22 et dans une ouverture supérieure 28 à l'extrémité de surface 20. La conduite comprend en outre un organe d'obturation dynamique 30 du passage intérieur 24 situé à l'extrémité de fond 22.

La conduite 14 présente, par exemple, une section transversale circulaire.

La conduite 14 présente un diamètre interne compris entre 12 cm et 102 cm.

La conduite 14 présente une longueur selon l'axe central A-A' comprise entre 100 m et 50 km. La conduite 14 présente, par exemple, une forme en caténaire selon l'axe central A-A'.

La conduite 14 est ici une conduite rigide métallique. La conduite 14 est avantageusement formée d'un assemblage de tronçons. Dans l'exemple, la conduite 14 est réalisée à base d'un alliage résistant à la corrosion. La conduite est une conduite CRA, par exemple, une conduite SDP, MCP ou MLP.

En variante, la conduite 14 est une conduite flexible. En variante, la conduite 14 est une conduite hybride qui comporte au moins une partie rigide et au moins une partie flexible.

La conduite 14 comporte différents tronçons 62, 64, 70 assemblés entre eux.

Chaque tronçon 62, 64, 70 comporte une extrémité inférieure et une extrémité supérieure. Chaque extrémité supérieure d'un tronçon est adaptée pour être soudée ou connectée à une extrémité inférieure d'un autre tronçon 62, 64, 70.

Dans l'exemple, chaque tronçon 62, 64, 70 est rigide. La longueur de chaque tronçon 62, 64, 70 est par exemple comprise entre 50 m et 200 m.

La conduite 14 comporte, en outre, un tronçon de fond 64 définissant une extrémité de fond 66 et une extrémité supérieure 68. Le tronçon de fond 64 contient à son extrémité de fond 66 l'organe d'obturation dynamique 30.

Dans un exemple non représenté, au moins un tronçon est, en outre, également assemblé à un équipement d'architecture sous-marine comme une architecture ILT (*In Line Tee*), une architecture FLET (*Flowline End Termination*), un collecteur, un séparateur sous-marin ou autres.

L'extrémité de surface 20 est disposée avantageusement au-dessus du niveau de la surface de l'étendue d'eau 2 sur l'ensemble de surface 12, ou dans un volume gazeux situé sous la surface 4 de l'étendue d'eau 2.

Dans l'exemple représenté, l'extrémité de fond 22 de la conduite 14 repose sur le fond 6 de l'étendue d'eau 2. En variante, l'extrémité de fond 22 de la conduite 14 est disposée libre dans l'étendue d'eau 2.

$W_d$ désigne la profondeur de l'extrémité de fond 22 de la conduite 14 par rapport à la surface 4 de l'étendue d'eau 2.

Le passage intérieur 24 est partiellement rempli d'eau jusqu'à une hauteur d'eau $h$.

La hauteur d'eau $h$ est mesurée entre la profondeur de l'extrémité de fond 22 et l'interface 40 entre l'eau et l'air dans le passage intérieur 24 de la conduite 14.

On appelle « colonne d'eau », la quantité d'eau dans le passage intérieur 24 comprise entre l'extrémité de fond 22 et l'interface 40.

La hauteur d'eau $h$ varie en fonction du pilonnement. La hauteur d'eau $h$ est régulée par l'organe d'obturation dynamique 30 pour atteindre la hauteur d'eau de consigne $a$ comme cela sera décrit par la suite.

On appelle pilonnement le mouvement dynamique de l'eau à l'intérieur de la conduite 14 sous l'effet de la variation de hauteur de la surface 4.

Le pilonnement présente, par exemple, une période To et une amplitude Ho tel que représenté sur la figure 2. La figure 2 représente la hauteur d'eau $h$ c'est-à-dire la hauteur de l'interface 40 dans la conduite 14 en fonction du temps.

En fonctionnement, la moyenne de la hauteur d'eau $h$ par exemple sur une période To est égale à la hauteur d'eau de consigne $a$.

La paroi 32 est étanche. La paroi 32 empêche la pénétration de l'eau depuis l'extérieur de la conduite 14 vers le passage intérieur 24.

L'organe d'obturation dynamique 30 est propre à s'ouvrir au-dessus d'une pression de seuil Pc pour permettre l'entrée d'eau dans le passage intérieur 24.

L'ouverture par l'organe d'obturation dynamique 30 est, par exemple, partielle. L'organe d'obturation dynamique 30 est propre à se refermer au-dessous de la pression de seuil Pc pour empêcher l'entrée d'eau dans le passage intérieur 24.

Selon l'invention, la pression de seuil Pc s'applique depuis l'extérieur vers l'intérieur de la conduite 14.

La pression de seuil Pc est définie en fonction d'au moins un paramètre représentatif du pilonnement de la conduite 14 sous l'effet de la variation de hauteur.

Par exemple, la pression de seuil Pc est définie en fonction de la période To du pilonnement et/ou en fonction de l'amplitude Ho du pilonnement.

La pression de seuil Pc est, de plus, définie avantageusement en fonction de la hauteur d'eau de consigne $a$.

La pression de seuil Pc est définie à la fois en fonction de la composante statique et du pilonnement.

La composante statique est la pression hydrostatique lié au poids de la colonne d'eau de hauteur d'eau de consigne $a$.

La pression de seuil Pc est de préférence définie par la formule ;

$$Pc \geq \rho.g.a + \rho.Ho.\left(\frac{2\pi}{To}\right)^2 (w_d - a)$$

Où :

- Pc est la pression de seuil de l'organe d'obturation 30,
- $\rho$ est la densité de l'eau
- g est la gravité,
- $a$ est la hauteur d'eau de consigne dans la conduite 14 entre l'interface 40 et l'extrémité de fond 22,
- $W_d$ est la profondeur de l'extrémité de fond 22 par rapport à la surface 4 de l'étendue d'eau 2,
- Ho est la hauteur du pilonnement, et
- To est la période du pilonnement.

Par exemple, l'ouverture de l'organe d'obturation dynamique 30 est ainsi ajustée en fonction de la pression de seuil Pc calculée par l'unité de calcul.

L'organe d'obturation dynamique 30 permet un contrôle dynamique de la pression dans le passage intérieur 24 de la conduite 14. L'organe d'obturation dynamique 30 contrôle ainsi l'inondation de la conduite 14.

L'organe d'obturation dynamique 30 est, par exemple, une valve d'inspection ou un clapet. En variante, l'organe d'obturation dynamique 30 comporte, en outre, d'autres composants hydrauliques permettant d'améliorer le système de pression selon une courbe de débit.

La pression de tarage de l'organe d'obturation dynamique 30 est réglée par des moyens hydrauliques, pneumatiques, électriques et/ou mécaniques.

L'organe d'obturation dynamique 30 comprend par exemple, un ressort taré propre à solliciter l'organe d'obturation dynamique vers une position de fermeture. Le passage de circulation est maintenu fermé tant que la différence de pression entre l'extérieur de la conduite et le passage intérieur 24 est inférieure à la pression de seuil Pc. Lorsque la différence de pression entre l'extérieur de la conduite et le passage intérieur 24 est au-dessus de la pression de seuil Pc, la pression à l'extérieur étant supérieure à celle du passage intérieur 24, l'organe d'obturation dynamique passe en position d'ouverture à l'encontre de la force engendrée par le ressort. De la sorte, l'organe d'obturation dynamique 30 autorise le passage d'eau depuis l'extérieur vers le passage intérieur 24 à travers l'ouverture inférieure 26 partiellement ouverte. Le ressort exerce un effort prédéterminé s'opposant à la rentrée du liquide lorsque le différentiel de pression est inférieur à la pression de seuil Pc.

En variante, l'ouverture de l'organe d'obturation dynamique 30 est commandée en fonction d'une mesure électronique, pneumatique ou hydraulique de la différence de pression entre l'extérieur de la conduite 14 et le passage intérieur 24.

Le capteur est avantageusement disposé sur l'ensemble de surface 12.

Le capteur permet de mesurer les variations de hauteur de l'ensemble de surface 12 et/ou de la surface 4. Par exemple, le capteur détermine des paramètres représentatifs de la houle en temps réel.

En variante, le capteur est disposé à l'écart de l'ensemble de surface 12, sur une bouée par exemple. Par exemple, le capteur disposé à l'écart alimente une base de données en mesures effectuées chaque jour.

L'unité de calcul est avantageusement disposée sur l'ensemble de surface 12.

L'unité de calcul est propre à déterminer un paramètre représentatif du pilonnement dans la conduite 14 en fonction de la variation de hauteur.

L'unité de calcul est propre à déterminer par exemple la période To du pilonnement et/ou de l'amplitude Ho du pilonnement en fonction de la variation de hauteur de la surface 4.

L'amplitude du pilonnement Ho est par exemple calculée en fonction de l'accélération de l'ensemble de surface 2, en fonction de la longueur de la conduite 14 remplie d'eau et/ou en fonction du diamètre de la conduite 14. L'amplitude du pilonnement Ho est calculée à partir de modèles physiques conventionnels d'hydrodynamique marine. L'amplitude du pilonnement Ho et la période du pilonnement To dépendent de l'amplitude et de la période de la houle. Le calcul de l'amplitude Ho et de la période To du pilonnement varie en fonction de la taille de l'ensemble de surface 12, des équipements qui sont disposés sur l'ensemble de surface 12 et de la taille de la conduite 14.

Par exemple, l'amplitude du pilonnement Ho est estimée à partir de valeurs prédéterminées. Par exemple, l'amplitude du pilonnement Ho est estimée à partir d'une hauteur significative maximale, obtenues à partir des valeurs maximales mesurées au cours d'une période prédéterminée, par exemple pendant les 50 dernières années ou les 100 dernières années. En variante, l'amplitude du pilonnement Ho est estimée à partir d'une valeur moyenne significative calculée à partir des mesures effectuées au cours d'une période prédéterminée, par exemple pendant les 50 dernières années ou les 100 dernières années. Ces valeurs significatives sont généralement basées sur des relevés en mer via une instrumentation embarquée sur une ou plusieurs bouées. Elles peuvent être mises à disposition sur une base de données accessible en interne ou via internet.

L'unité de calcul est propre à déterminer une pression de seuil Pc en fonction du paramètre représentatif du pilonnement dans la conduite 14. L'unité de calcul est propre à déterminer une pression de seuil Pc en fonction de la hauteur d'eau de consigne a.

Les forces d'inertie associées au pilonnement sont converties en pression de seuil Pc par un calcul.

Plus, la hauteur de consigne a de la colonne d'eau est importante, plus la pression de seuil Pc est importante.

Par exemple, la pression de seuil Pc est supérieure à 10 bars dans une conduite de 25 centimètre de diamètre immergée dans 1500 m d'eau.

Dans un premier mode de réalisation, la pression de seuil Pc est déterminée initialement en choisissant la valeur obtenue lorsque la conduite 14 repose au fond de l'étendue d'eau 2. L'organe d'obturation dynamique 30 est alors réglé à la pression de seuil Pc en surface avant son immersion et conserve son réglage lors de la pose.

Un procédé de régulation de la hauteur d'eau h dans une conduite 14 mise en place dans une étendue d'eau 2 depuis une surface soumise à une variation de hauteur va maintenant être décrit.

Un paramètre représentatif du pilonnement de la conduite 14 sous l'effet de la variation de hauteur est fourni. Par exemple, le capteur mesure la houle et détermine la variation de hauteur de l'ensemble de surface 12.

L'unité de calcul calcule un paramètre représentatif du pilonnement, par exemple la période du pilonnement et/ou l'amplitude du pilonnement en fonction de la variation de hauteur. Une pression de seuil Pc est calculée en fonction du paramètre représentatif du pilonnement par l'unité de calcul.

Une fois la pression de seuil Pc évaluée par l'unité de calcul, il est possible de compenser l'effet du pilonnement par le contrôle de l'organe d'obturation dynamique 30.

L'organe d'obturation dynamique 30 est réglé en fonction de la pression de seuil Pc déterminée, sur l'ensemble de surface 12 avant l'immersion de la conduite 14. Une fois la pression de seuil Pc réglée, la conduite 14 est immergée dans l'étendue d'eau 2.

Si la pression interne de la conduite 14 est inférieure à la pression de seuil Pc, l'eau entre dans le passage intérieur 24 par l'ouverture inférieure 26. La hauteur d'eau h s'élève jusqu'à la hauteur d'eau de consigne a correspondant à la hauteur utilisée pour le calcul de la pression de seuil Pc. Le volume d'eau dans le passage intérieur 24 de la conduite augmente. Le niveau de l'interface 40 augmente jusqu'à ce que la pression à l'intérieur de la conduite au niveau de l'organe d'obturation dynamique 30 soit supérieure ou égale à la pression de seuil Pc.

Lorsque la pression interne de la conduite est égale à la pression de seuil Pc, la hauteur d'eau h, le niveau de l'interface 40 est à la hauteur d'eau de consigne a.

L'organe d'obturation dynamique 30 se referme alors.

Une méthode de mise en place de la conduite 14 dans une étendue d'eau 2 va maintenant être décrite.

Initialement, les tronçons 62, 64, 70 destinés à former la conduite sont fournis sur l'ensemble de surface 12.

La pression de seuil Pc est évaluée par l'unité de calcul, en tenant compte du pilonnement.

L'organe d'obturation dynamique 30 est réglé en fonction de la pression de seuil Pc, par exemple, sur l'ensemble de surface 12 avant l'immersion du tronçon de fond 66.

L'extrémité de fond 66 du tronçon de fond 64 est mise dans l'eau au moyen des équipements de pose jusqu'à une certaine profondeur.

La hauteur d'eau h dans la conduite 14 formée par le tronçon de fond 64 est régulée par l'organe d'obturation dynamique 30 comme précédemment décrit.

Un deuxième tronçon 70 est ensuite soudé sur l'extrémité supérieure 68 du tronçon de fond 64 à l'aide des équipements de pose.

La hauteur d'eau h est régulée avant l'étape de soudage de manière à être à l'écart de l'extrémité supérieure 68 du tronçon de fond 64.

Ensuite, la conduite formée par le deuxième tronçon 70 et le tronçon de fond 64 est immergée plus profondément dans l'eau.

Un troisième tronçon 72 est soudé sur l'extrémité supérieure de la conduite formée par le deuxième tronçon 70 et le tronçon de fond 64.

Le procédé est ainsi reproduit, jusqu'à obtenir la longueur de conduite 14 désirée.

Au cours de la pose de la conduite 14, l'extrémité de fond 22 est initialement libre dans l'étendue d'eau 2 jusqu'à entrer en contact avec le fond 6 de l'étendue d'eau 5 et reposer sur le fond 6.

Dans un deuxième mode de réalisation, l'unité de calcul détermine l'amplitude Ho et la période To à plusieurs reprises au cours de la pose de la conduite 14 à partir des mesures du capteur.

Avantageusement après chaque nouvelle détermination de l'amplitude Ho et de la période To du pilonnement, une pression de seuil Pc est calculée par l'unité de calcul et l'organe d'obturation dynamique 30 est réglé à la pression de seuil Pc.

Par exemple, l'unité de calcul est propre à déterminer une séquence de pression de seuil Pc en fonction d'une série de hauteurs d'eau de consigne à adapter à la pose de la conduite.

L'organe d'obturation dynamique 30 est réglé successivement à une première pression de seuil Pc correspondant, par exemple, à une première hauteur d'eau de consigne a, puis à une deuxième pression de seuil Pc correspondant à une deuxième hauteur d'eau de consigne a.

La méthode de mise en place de la conduite 14 dans une étendue d'eau 2 selon le deuxième mode de réalisation diffère de la méthode précédemment décrite en ce que la pression de seuil Pc est déterminée à chaque instant lors de la descente de la conduite 14 dans l'étendue d'eau 2. La méthode comprend alors plusieurs étapes de réglages de l'organe d'obturation dynamique 30 à la pression de seuil Pc adaptée.

Le niveau de la pression de seuil Pc est avantageusement ajusté sur l'organe d'obturation dynamique 30 après chaque étape d'immersion. En variante, l'organe d'obturation dynamique 30 est piloté en permanence pour s'ouvrir en fonction de la pression de seuil Pc déterminée à chaque instant. Par exemple, l'organe d'obturation dynamique 30 est réglé manuellement par un plongeur, un véhicule sous-marin téléguidé ou autonome ROV, AUV. En variante, la partie réglable de l'organe d'obturation dynamique 30 est télécommandée, par exemple, depuis l'ensemble de surface 12.

Le contrôle du niveau d'eau est effectué tout au long de la séquence de pose.

La régulation du niveau d'eau au cours de l'immersion de la conduite 14 pendant son installation permet d'éviter les problèmes mentionnés. Les opérations de soudage en surface sont facilitées.

L'utilisation d'un organe d'obturation dynamique 30 permet d'éviter de pomper l'air humide et rend les opérations de soudage plus simple.

L'utilisation d'un organe d'obturation dynamique 30 permet de contrôler l'inondation dans la conduite 14. Ceci permet de limiter le niveau de l'eau suffisamment sous le niveau de la surface de l'étendue d'eau 2.

L'eau applique une pression croissante à l'extrémité de fond 22 en fonction de la profondeur à l'extérieur de l'organe d'obturation 30.

Le passage intérieur 24 est partiellement inondé par l'eau de l'étendue d'eau 2 dans laquelle est plongée la conduite 14 jusqu'à une hauteur d'eau de consigne a dépendant de la pression de seuil Pc.

Le fait de déterminer l'amplitude maximale Ho du mouvement de pilonnement de la conduite 14 pour régler la pression de seuil Pc de l'organe d'obturation dynamique 30 permet d'avoir un procédé robuste pour immerger la conduite.

Le niveau de l'interface 40 à l'intérieur de la conduite est contrôlé par l'organe d'obturation dynamique 30 qui s'ouvre et se ferme régulièrement, en tenant compte du pilonnement.

La possibilité d'obtenir une conduite 14 vide partiellement permet d'avoir une conduite 14 plus légère mais restant lourde au niveau du fond 8 de l'étendue d'eau 2. La mise en place de la conduite 14 est alors facilitée.

En outre, ce contrôle permet d'empêcher l'expulsion de l'eau par l'ouverture supérieure 28.

En outre, la maitrise du poids de la conduite 14 en maitrisant la hauteur d'eau h permet de limiter la dégradation des équipements de pose de la conduite 14.

Dans une variante, la conduite 14 comporte, en outre, une pompe volumétrique. La pompe volumétrique est utilisée en complément de l'organe d'obturation dynamique 30 qui maintient le niveau de l'eau dans la conduite 14 à un niveau désiré.

En variante, la conduite 14 est déroulée de manière continue depuis la surface 4 et est descendue progressivement dans l'étendue d'eau 2.

Dans une variante, seulement une partie de la conduite est en alliage résistant à la corrosion.

Dans une variante, la conduite 14 est une conduite flexible avantageusement formée d'un assemblage de tronçons. Par exemple, la conduite 14 est une conduite flexible à passage interne lisse, désignée usuellement par le terme conduite « smooth bore » ou autres.

La conduite 14 comporte différents tronçons flexibles assemblés entre eux. Chaque tronçon comporte une extrémité inférieure et une extrémité supérieure. La longueur de chaque tronçon flexible est par exemple comprise entre 50 m et 50 km.

Par exemple, la conduite comporte des connecteurs pour assembler l'extrémité supérieure d'un tronçon à une extrémité inférieure d'un autre tronçon.

Dans un mode de réalisation, comme décrit plus haut, l'organe d'obturation dynamique 30 est apte à s'ouvrir lorsque la différence entre la pression à l'extérieur de la conduite 14, s'appliquant sur l'organe d'obturation dynamique 30, et la pression dans le passage interne 24, s'appliquant sur l'organe d'obturation dynamique 30, est supérieure ou égale à la pression de seuil Pc.

L'organe d'obturation dynamique 30 est apte à être fermé lorsque la différence entre la pression à l'extérieur de la conduite 14, s'appliquant sur l'organe d'obturation dynamique 30, et la pression dans le passage interne 24, s'appliquant sur l'organe d'obturation dynamique 30, est inférieure à la pression de seuil Pc.

Ceci est notamment le cas lorsque l'organe d'obturation dynamique 30 comprend une vanne ou un clapet muni d'un ressort taré.

La différence de pression s'appliquant de part et d'autre de l'organe d'obturation 30 pilote alors son ouverture.

Plus généralement, l'organe d'obturation dynamique 30 est apte à s'ouvrir lorsque la différence entre la pression à l'extérieur de la conduite 14, s'appliquant en un point quelconque situé à l'extérieur de la conduite 14, et la pression dans le passage interne 24, s'appliquant en un point quelconque du passage interne 24, est supérieure ou égale à la pression de seuil Pc. De préférence, les points d'application de la pression sont situés au niveau de l'organe d'obturation dynamique 30, de part et d'autre de l'organe d'obturation dynamique 30.

L'organe d'obturation dynamique 30 est alors apte à être fermé lorsque cette différence de pression est inférieure à la pression de seuil Pc.

Ceci est notamment le cas lorsque l'ouverture de l'organe d'obturation dynamique 30 est commandée en fonction d'une mesure électronique, pneumatique ou hydraulique de la différence de pression entre l'extérieur de la conduite 14 et le passage intérieur 24, au niveau des points précités.

Dans tout ce qui précède, l'organe d'obturation dynamique 30 comporte à l'extrémité de fond 22 un moyen de commande de son ouverture et de sa fermeture. Le moyen de commande est par exemple un organe mécanique tel qu'un ressort taré.

En variante, le moyen de commande est un actionneur, dans le cas où l'ouverture et la fermeture est commandée en fonction d'une mesure électronique, pneumatique ou hydraulique de la différence de pression entre l'extérieur de la conduite 14 et le passage intérieur 24.

L'actionneur est par exemple muni d'une unité de pilotage située à l'extrémité de fond 22, propre à comparer la différence de pression mesurée à la pression de seuil Pc et à piloter l'actionneur en conséquence.

Dans une variante, l'unité de pilotage est déportée par rapport à l'actionneur et est reliée à l'actionneur.

**Revendications**

1. Conduite (14) destinée à être mise en place dans une étendue d'eau (2) depuis une surface (12) soumise à une variation de hauteur, la conduite (14) s'étendant entre une extrémité de surface (20) et une extrémité de fond (22), et définissant un passage intérieur (24) débouchant à l'extrémité de fond (20) et à l'extrémité de surface (20), la conduite (14) comprenant un organe d'obturation dynamique (30) à l'extrémité de fond (22) propre à s'ouvrir au-dessus d'une pression de seuil (Pc), s'appliquant depuis l'extérieur vers l'intérieur de la conduite (14) et à se refermer au-dessous de la pression de seuil (Pc), **caractérisée en ce que** la pression de seuil (Pc) est définie en fonction d'au moins un paramètre représentatif (Ho, To) du pilonnement de la conduite sous l'effet de la variation de hauteur.

2. Conduite (14) selon la revendication 1 dans laquelle la pression de seuil (Pc) est définie en fonction de la période (To) du pilonnement.

3. Conduite (14) selon la revendication 1 ou 2, dans laquelle la pression de seuil (Pc) est définie en fonction de l'amplitude (Ho) du pilonnement.

4.  Conduite (14) selon l'une quelconque des revendications précédentes dans laquelle le passage intérieur (24) est partiellement rempli d'eau jusqu'à une hauteur d'eau (h) régulée par l'organe d'obturation dynamique (30).

5.  Conduite (14) selon la revendication 4, dans laquelle la pression de seuil (Pc) est donnée par la formule :

$$Pc \geq \rho.g.a + \rho.Ho.\left(\frac{2\pi}{To}\right)^2 (w_d - a),$$

où :

Pc est la pression de seuil de l'organe d'obturation dynamique (30),
$\rho$ est la densité de l'eau de l'étendue d'eau (2),
g est la gravité,
a est la hauteur d'eau de consigne dans la conduite (14) par rapport à l'extrémité de fond (22),
$w_d$ est la profondeur de l'extrémité de fond (22) par rapport à la surface (12),
Ho est la hauteur du pilonnement, et
To est la période du pilonnement.

6.  Conduite (14) selon l'une quelconque des revendications précédentes dans laquelle la conduite est formée de tronçons de conduite soudés entre eux.

7.  Conduite (14) selon l'une quelconque des revendications précédentes, dans laquelle la conduite est réalisée à base d'un alliage résistant à la corrosion.

8.  Procédé de régulation de la hauteur d'eau (a) dans une conduite (14) mise en place dans une étendue d'eau (2) depuis une surface (12) soumise à une variation de hauteur, la conduite (14) s'étendant entre une extrémité de surface (20) et une extrémité de fond (22), et définissant un passage intérieur (24) débouchant à l'extrémité de fond (22) et à l'extrémité de surface (20), la conduite (14) comprenant un organe d'obturation dynamique (30) à l'extrémité de fond (22) propre à s'ouvrir au-dessus d'une pression de seuil (Pc) s'appliquant depuis l'extérieur vers l'intérieur de la conduite (14) et à se refermer au-dessous de la pression de seuil (Pc), le procédé comprenant les étapes suivantes :

- fourniture d'un paramètre représentatif (Ho, To) du pilonnement de la conduite (14) sous l'effet de la variation de hauteur,
- calcul d'une pression de seuil (Pc) en fonction du paramètre représentatif (Ho, To) du pilonnement,
- réglage de l'ouverture de l'organe d'obturation dynamique (30) à la pression de seuil (Pc).

9.  Procédé de régulation selon la revendication 8, dans lequel la pression de seuil (Pc) est donnée par la formule :

$$Pc \geq \rho.g.a + \rho.Ho.\left(\frac{2\pi}{To}\right)^2 (w_d - a)$$

Où :

Pc est la pression de seuil Pc de l'organe d'obturation dynamique (30)
$\rho$ est la densité de l'eau de l'étendue d'eau (2),
g est la gravité,
a est la hauteur d'eau de consigne dans la conduite (14) et par rapport à l'extrémité de fond.
$w_d$ est la profondeur de l'extrémité de fond (22) par rapport à la surface (12),
Ho est la hauteur du pilonnement, et
To est la période du pilonnement.

10.  Méthode de mise en place d'une conduite (14) dans une étendue d'eau (2), la conduite (14) comprenant un tronçon de fond (64) présentant une extrémité de fond (66) et une extrémité supérieure (68), la conduite (14) comprenant un organe d'obturation dynamique (30) à l'extrémité de fond, propre à s'ouvrir au-dessus d'une pression de seuil (Pc) s'appliquant depuis l'extérieur vers l'intérieur de la conduite (14) et à se refermer au-dessus de la pression de seuil et au moins un deuxième tronçon (70), la méthode de mise en place comprenant les étapes suivantes :

- mise en place d'un tronçon de fond (64) comprenant l'organe d'obturation dynamique (30) dans l'eau,
- descente du deuxième tronçon (70) dans l'étendue d'eau (2),

la hauteur d'eau (h) étant régulée dans la conduite (14) par un procédé de régulation selon l'une des revendications 8 et 9 de manière à être à l'écart de l'extrémité supérieure (68) du tronçon de fond (64).

**Patentansprüche**

1.  Leitung (14), die dazu bestimmt ist, in einem Gewässer (2) platziert zu werden ausgehend von einer Fläche (12), die einer Höhenvariation unterliegt, wobei sich die Leitung (14) zwischen einem Fläche-Ende (20) und einem Boden-Ende (22) erstreckt und einen inneren Durchgang (24) definiert, der an dem Boden-Ende (20) und an dem Fläche-Ende (20) ausmündet, wobei die Leitung (14) ein Organ zur dynamischen Absperrung (30) an dem Boden-Ende (22) aufweist, das imstande ist, sich oberhalb eines Schwellendrucks (Pc) zu öffnen, der vom Äußeren zum Inneren der Leitung (14) hin aufgebracht ist, und sich unterhalb des Schwellendrucks (Pc) zu schließen, **dadurch gekennzeichnet, dass** der Schwellendruck (Pc) definiert ist in Abhängigkeit von wenigstens einem repräsentativen Parameter (Ho, To) des Stampfens der Leitung unter der Wirkung der Höhenvariation.

2. Leitung (14) gemäß Anspruch 1, wobei der Schwellendruck (Pc) definiert ist in Abhängigkeit von der Periode (To) des Stampfens.

3. Leitung (14) gemäß Anspruch 1 oder 2, wobei der Schwellendruck (Pc) definiert in Abhängigkeit von der Amplitude (Ho) des Stampfens.

4. Leitung (14) gemäß irgendeinem der vorhergehenden Ansprüche, wobei der innere Durchgang (24) partiell mit Wasser gefüllt ist bis zu einer Wasserhöhe (h), die mittels des Organs zur dynamischen Absperrung (30) reguliert wird.

5. Leitung (14) gemäß Anspruch 4, wobei der Schwellendruck (Pc) gegeben ist durch die Formel:

$$Pc \geq \rho.g.a + \rho.Ho.\left(\frac{2\pi}{To}\right)^2 (w_d - a) \, ,$$

wobei:

Pc der Schwellendruck des Organs zur dynamischen Absperrung (30) ist,
$\rho$ die Dichte des Wassers des Gewässers (2) ist,
g die Erdbeschleunigung ist,
a die Soll-Wasserhöhe in der Leitung (14) bezüglich des Boden-Endes (22) ist,
$w_d$ die Tiefe des Boden-Endes (22) bezüglich der Fläche (12) ist,
Ho die Höhe des Stampfens ist, und
To die Periode des Stampfens ist.

6. Leitung (14) gemäß irgendeinem der vorhergehenden Ansprüche, wobei die Leitung aus aneinandergeschweißten Leitungsabschnitten gebildet ist.

7. Leitung (14) gemäß irgendeinem der vorhergehenden Ansprüche, wobei die Leitung realisiert ist auf Basis einer gegen Korrosion resistenten Legierung.

8. Verfahren zur Regulierung der Wasserhöhe (a) in einer Leitung (14), die in einem Gewässer (2) platziert ist ausgehend von einer Fläche (12), die einer Höhenvariation unterliegt, wobei sich die Leitung (14) zwischen einem Fläche-Ende (20) und einem Boden-Ende (22) erstreckt und einen inneren Durchgang (24) definiert, der an dem Boden-Ende (22) und an dem Fläche-Ende (20) ausmündet, wobei die Leitung (14) ein Organ zur dynamischen Absperrung (30) am Boden-Ende (22) aufweist, das imstande ist, sich oberhalb eines Schwellendrucks (Pc) zu öffnen, der vom Äußeren zum Inneren der Leitung (14) hin aufgebracht ist, und sich unterhalb des Schwellendrucks (Pc) zu schließen, wobei das Verfahren die folgenden Schritte aufweist:

- Bereitstellen eines repräsentativen Parameters (Ho, To) des Stampfens der Leitung (14) unter der Wirkung der Höhenvariation,
- Berechnen eines Schwellendrucks (Pc) in Abhängigkeit von dem repräsentativen Parameter (Ho, To) des Stampfens,
- Einstellen des Öffnens des Organs zur dynamischen Absperrung (30) auf den Schwellendruck (Pc).

9. Verfahren zur Regulierung gemäß Anspruch 8, wobei der Schwellendruck (Pc) durch die folgende Formel gegeben ist:

$$Pc \geq \rho.g.a + \rho.Ho.\left(\frac{2\pi}{To}\right)^2 (w_d - a) \, ,$$

wobei:

Pc der Schwellendruck Pc des Organs zur dynamischen Absperrung (30) ist,
$\rho$ die Dichte des Wassers des Gewässers (2) ist,
g die Erdbeschleunigung ist,
a die Soll-Wasserhöhe in der Leitung (14) bezüglich des Boden-Endes ist,
$w_d$ die Tiefe des Boden-Endes (22) bezüglich der Fläche (12) ist,
Ho die Höhe des Stampfens ist, und
To die Periode des Stampfens ist.

10. Verfahren zum Platzieren einer Leitung (14) in einem Gewässer (2), wobei die Leitung (14) einen Boden-Abschnitt (64) aufweist, der ein Boden-Ende (66) und ein oberes Ende (68) aufweist, wobei die Leitung (14) aufweist ein Organ zur dynamischen Absperrung (30) an dem Boden-Ende, das imstande ist, sich oberhalb eines Schwellendrucks (Pc) zu öffnen, der von dem Äußeren aus zum Inneren der Leitung (14) hin aufgebracht ist, und sich unterhalb des Schwellendrucks zu schließen, und wenigstens einen zweiten Abschnitt (70), wobei das Verfahren des Platzierens die folgenden Schritte aufweist:

- Platzieren eines Boden-Abschnitts (64), der das Organ zur dynamischen Absperrung (30) aufweist, im Wasser,
- Ablassen des zweiten Abschnitts (70) in das Gewässer (2),

wobei die Wasserhöhe (h) in der Leitung (14) reguliert wird mittels eines Verfahrens zur Regulierung gemäß einem der Ansprüche 8 und 9, um im Abstand von dem oberen Ende (68) des Boden-Abschnitts (64) zu sein.

## Claims

1. Pipe (14) intended to be installed in position in a body of water (2) from a surface (12) that is subjected to variation in height, the pipe (14) extending between a surface end (20) and a bottom end (22), and defining an internal passage (24) opening at the bottom end (20) and at the surface end (20), the pipe (14) comprising a dynamic closing member (30) at the bottom end (22) which is adapted to open above a threshold pressure (Pc), applied from the exterior towards the interior of the pipe (14) and to close below the threshold pressure (Pc) ; wherein the threshold pressure (Pc) is defined as a function of at least one parameter that is representative (Ho, to) of the heave of the pipe under the effect of the height variation.

2. Pipe (14) according to claim 1, wherein the threshold pressure (Pc) is defined as a function of the period (To) of the heave.

3. Pipe (14) according to claim 1 or 2, wherein the threshold pressure (Pc) is defined as a function of the amplitude (Ho) of the heave.

4. Pipe (14) according to any one of the preceding claims, wherein the internal passage (24) is partially filled with water up to a water height (h) that is regulated by the dynamic closing member (30).

5. Pipe (14) according to claim 4, wherein the threshold pressure (Pc) is given by the formula:

$$Pc \geq \rho.g.a + \rho.Ho.\left(\frac{2\pi}{To}\right)^2 (w_d - a)$$

wherein:

Pc is the threshold pressure of the dynamic closing member (30) ;
$\rho$ is the density of the water of the body of water (2) ;

g is gravity;
a is the set point water height in the pipe (14) in relation to the bottom end (22) ;
$w_d$ is the depth of the bottom end (22) in relation to the surface (12) ;
Ho is the height of the heave, and
To is the period of the heave.

6. Pipe (14) according to any one of the preceding claims, wherein the pipe is formed of pipe sections that are welded together.

7. Pipe (14) according to any one of the preceding claims, wherein the pipe is manufactured from a corrosion - resistant alloy based material.

8. Method for regulating the height of the water (a) in a pipe (14) installed in position in a body of water (2) from a surface (12) that is subjected to a variation in height, the pipe (14) extending between a surface end (20) and a bottom end (22), and defining an internal passage (24) opening at the bottom end (22) and at the surface end (20), the pipe (14) comprising a dynamic closing member (30) at the bottom end (22) which is adapted to open above a threshold pressure (Pc) applied from the exterior towards the interior of the pipe (14) and to close below the threshold pressure (Pc), the method comprising of the following steps:

- providing a representative parameter (Ho, to) that is representative of the heave of the pipe (14) under the effect of the variation in height;
- calculating a threshold pressure (Pc) as a function of the representative parameter (Ho, to) that is representative of the heave;
- adjustment of the opening of the dynamic closing member (30) to the threshold pressure (Pc).

9. Method according to claim 8, wherein the threshold pressure (Pc) is given by the formula:

$$Pc \geq \rho.g.a + \rho.Ho.\left(\frac{2\pi}{To}\right)^2 (w_d - a)$$

Where:

Pc is the threshold pressure Pc of the dynamic closing member (30)
$\rho$ is the density of th water of the body of water (2) ;
g is gravity;
a is the set point water height in the pipe (14) and in relation to the bottom end.
$w_d$ is the depth of the bottom end (22) in relation to the surface (12) ;

Ho is the height of the heave, and
To is the period of the heave.

10. Installation method for installing a pipe (14) in a body of water (2), the pipe (14) comprising a bottom section (64) having a bottom end (66) and an upper end (68), the pipe (14) comprising a dynamic closing member (30) at the bottom end, which is adapted to open above a threshold pressure (Pc) applied from the exterior towards the interior of the pipe (14) and to close above the threshold pressure and at least one second section (70), the installation method comprising of the following steps:

    - installation of the bottom section (64) comprising the dynamic closing member (30) in the water;
    - lowering of the second section (70) into the body of water (2);

the height of the water (h) being regulated in the pipe (14) by a regulation method according to any one of claims 8 and 9 in a manner so as to be at a distance away from the upper end (68) of the bottom section (64).

## FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015063920 A1